# EUROPÄISCHE PATENTANMELDUNG

(11) **EP 1 990 036 A2**
(43) Veröffentlichungstag der Anmeldung: **12.11.2008**
(21) Anmeldenummer: 08007675.5
(22) Anmeldetag: 19.04.2008
(51) Int. Cl.: A61G 5/06

(54) **Treppensteig- und Transportvorrichtung**

(30) Priorität: 05.05.2007 DE 202007006453 U
(71) Anmelder: AAT Alber Antriebstechnik GmbH, 72458 Albstadt (DE)
(72) Erfinder: Alber, Markus, 72458 Albstadt (DE)
(74) Vertreter: Kohler Schmid Möbus

(57) **Zusammenfassung**

Treppensteig- und Transportvorrichtung (10) zum Transport von Gegenständen jedweder Art und/oder Personen, mit einer Rahmenkonstruktion (12), an der neben einer Lastaufnahmevorrichtung (14, 15) für den zu transportierenden Gegenstand und/oder für die zu transportierende Person Laufräder (16) und gegebenenfalls Lenkräder (18) und Bedienelemente (26, 28) vorgesehen sind, wobei im Bereich der Laufräder (16) an der Rahmenkonstruktion (12) mindestens ein Rollkörper (22) vorgesehen ist, der in einer ersten Lage bei Auflage der Laufräder (16) auf einer Bodenoberfläche (19) von der Bodenoberfläche (19) beabstandet ist, und in einer zweiten Lage auf der Bodenoberfläche (19), die Last der Treppensteig- und Transportvorrichtung (10) aufnehmend, aufliegt und dabei gleichzeitig die Laufräder (16) von der Bodenoberfläche (19) beabstandet sind.

## Beschreibung

Die Erfindung betrifft eine Treppensteig- und Transportvorrichtung zum Transport von Gegenständen jedweder Art und/oder Personen, mit einer Rahmenkonstruktion, an der neben einer Lastaufnahmevorrichtung für den zu transportierenden Gegenstand und/oder für die zu transportierende Person Laufräder und gegebenenfalls Lenkräder und Bedienelemente vorgesehen sind.

Derartige Treppensteig- und Transportvorrichtungen sind beispielsweise durch die Patentanmeldungen DE 195 19 109 A1 und EP 0 903 278 A2 bekannt geworden. Darüber hinaus vertreibt die Firma AAT Alber Antriebstechnik GmbH eine Treppensteig- und Transportvorrichtung, die neben den Laufrädern auch Lenkräder aufweist. Vertrieben wird eine derartige Vorrichtung beispielsweise unter der Bezeichnung "s-max".

Treppensteig- und Transportvorrichtungen werden in bekannter Weise bevorzugt für den Transport von Personen eingesetzt, die aus gesundheitlichen Gründen nicht mehr eigenständig eine Treppe hinauf- und/oder hinabsteigen können. Dabei können derartige Steigvorrichtungen auch einen motorischen Antrieb aufweisen, der das Treppenauf- und -absteigen mit einer bekannten Vorrichtung erleichtert. Die Treppensteig- und Transportvorrichtung wird in der Regel von einer Person bewegt und gesteuert, indem sie über Bedienelemente, wie Handgriffe und/oder Schalt- und Bedienknöpfe die Treppensteig- und Transportvorrichtung verfährt.

Wird beispielsweise ein Absatz oder eine Treppenstufe beim Verschieben einer solchen bekannten Treppensteig- und Transportvorrichtung durch eine sie bedienende Person angesteuert, so können sich zahlreiche Situationen ergeben, die es erforderlich machen, dass die bekannte Treppensteig- und Transportvorrichtung auf engstem Raum zu manövrieren ist, damit beispielsweise der zu überwindende Absatz bestmöglich angefahren werden kann. Dabei wird die Beweglichkeit der bekannten Treppensteig- und Transportvorrichtungen besonders durch die Ausgestaltung der Laufräder begrenzt.

Aufgabe der Erfindung ist es deshalb, eine bekannte Treppensteig- und Transportvorrichtung so weiterzuentwickeln, dass sie auch auf engstem Raum einfach und mit geringem Kraftaufwand richtungsändernd sicher verfahrbar ist.

Gelöst wird die Problemstellung erfindungsgemäß dadurch, dass im Bereich der Laufräder an der Rahmenkonstruktion mindestens ein Rollkörper vorgesehen ist, der in einer ersten Lage bei Auflage der Laufräder auf einer Bodenfläche von der Bodenoberfläche beabstandet ist und in einer zweiten Lage auf der Bodenoberfläche, die Last der Treppensteig- und Transportvorrichtung aufnehmend, aufliegt, und dabei gleichzeitig die Laufräder von der Bodenoberfläche beabstandet sind.

Dies hat den Vorteil, dass die die Beweglichkeit der Treppensteig- und Transportvorrichtung begrenzenden Laufräder an einem auf engstem Raum durchzuführenden Richtungswechsel der Treppensteig- und Transportvorrichtung nicht mehr teilnehmen. Die Laufräder sollen einerseits einen möglichst großen Durchmesser aufweisen, damit eine Treppensteig- und Transportvorrichtung mit wenigen Umdrehungen der Laufräder einen großen Weg zurücklegen kann. Andererseits wird durch große Laufräder die Manövrierbarkeit einer Treppensteig- und Transportvorrichtung auf engstem Raum eingeschränkt, weil große Wendekreise für einen Richtungswechsel einer derartigen Treppensteig- und Transportvorrichtung benötigt werden. Wird nun erfindungsgemäß zusätzlich zu den Laufrädern in deren Bereich mindestens ein Rollkörper eingesetzt, der bei Verfahrbewegungen der Treppensteig- und Transportvorrichtung auf engstem Raum bei Richtungswechseln die Laufräder ersetzen kann, so ist eine derartige Treppensteig- und Transportvorrichtung viel beweglicher, weil für diese Verfahrvorgänge Räder und/oder Rollkörper eingesetzt werden können, die diese gewünschten Richtungswechsel ohne große Verfahrwege bewerkstelligen können.

Liegt der Rollkörper auf der Bodenoberfläche auf, so können die Laufrollen über den Treppensteigmechanismus von der Bodenoberfläche abgehoben werden und die Treppensteig- und Transportvorrichtung wird dann nur noch über den Rollkörper und die Lenkräder verfahren. Die Treppensteig- und Transportvorrichtung ist dann sehr wendig und ist in einem hohen Maße manövrierfähig, beispielsweise in Treppenhäusern oder in Gangways von Flugzeugen oder in sehr schmalen Gängen in Zugabteilen.

In weiterer vorteilhafter Ausgestaltung der Erfindung liegt der mindestens eine Rollkörper über eine drehbare Kugel, ein Rad, einen Wälzkörper oder dergleichen auf der Bodenfläche auf. Dies hat den Vorteil, dass für die Auswahl des Rollkörpers bzw. einer Transitrolle immer die drehbaren Bauteile ausgewählt werden können, die am besten in eine Rahmenkonstruktion einfügbar sind. Eine Kugelrolle ist beispielsweise in allen Richtungen verfahrbar und somit ist eine mit einer Kugelrolle ausgerüstete Treppensteig- und Transportvorrichtung auf engstem Raum sehr wendig.

In einer weiteren vorteilhaften Ausgestaltung der Erfindung sind zwei voneinander beabstandete Rollkörper vorgesehen. Wird eine derartige Treppensteig- und Transportvorrichtung über zwei Rollkörper verfahren, so ist die Treppensteig- und Transportvorrichtung sowohl seitlich wie auch nach vorne und hinten kippstabil ausgebildet.

Bevorzugt sind der oder die Rollkörper hinter den Laufrädern, in Fahrtrichtung der Treppensteig- und Transportvorrichtung gesehen, angeordnet. Das heißt, der oder die Rollkörper laufen den Laufrädern nach. Bei einer derartigen Anordnung der Rollkörper ist die Treppensteig- und Transportvorrichtung besonders kippstabil.

Für die Anbringung der Rollkörper an der Rahmenkonstruktion weist die Rahmenkonstruktion bevorzugt ein Stativrohr auf, an dem der oder die Rollkörper über einen Stützfuß und eine Aufnahme verschiebbar und arretierbar befestigt sind.

Dies hat den Vorteil, dass die Rollkörper sehr einfach und effektiv an der Rahmenkonstruktion anbringbar sind. Bei Bedarf können die Rollkörper auf die Bodenoberfläche durch eine Verschiebebewegung (mechanisch oder elektrisch) am Stativrohr auf die Bodenoberfläche abgesenkt werden oder von der Bodenoberfläche abgehoben werden. Liegen der oder die Rollkörper auf der Bodenoberfläche auf, so können die Laufräder über den Treppensteigmechanismus von der Bodenoberfläche abgehoben werden. Sind die Laufräder von der Bodenoberfläche abgehoben, so ersetzen die Rollkörper die Laufräder beim Verfahren der erfindungsgemäßen Treppensteig- und Transportvorrichtung.

In den folgenden Figuren der Zeichnung wird anhand eines Ausführungsbeispiels die erfindungsgemäße Treppensteig- und Transportvorrichtung beschrieben. Die in den Figuren gezeigten Merkmale sind nicht maßstäblich zu verstehen und stellen den erfindungsgemäßen Gegenstand stark vereinfacht dar.

Es zeigt:
- Fig. 1: eine Seitenansicht einer erfindungsgemäßen Treppensteig- und Transportvorrichtung, wobei der Rollkörper von einer Bodenoberfläche beabstandet ist;
- Fig. 2: eine Seitenansicht einer erfindungsgemäßen Treppensteig- und Transportvorrichtung, bei der die Laufräder von der Bodenoberfläche abgehoben sind und der oder die Rollkörper auf die Bodenoberfläche abgesenkt werden; und
- Fig. 3: eine Seitenansicht einer erfindungsgemäßen Treppensteig- und Transportvorrichtung, bei der der oder die Rollkörper auf der Bodenoberfläche aufliegen und die Treppensteig- und Transportvorrichtung über den oder die Rollkörper und Lenkräder verfahrbar ist.

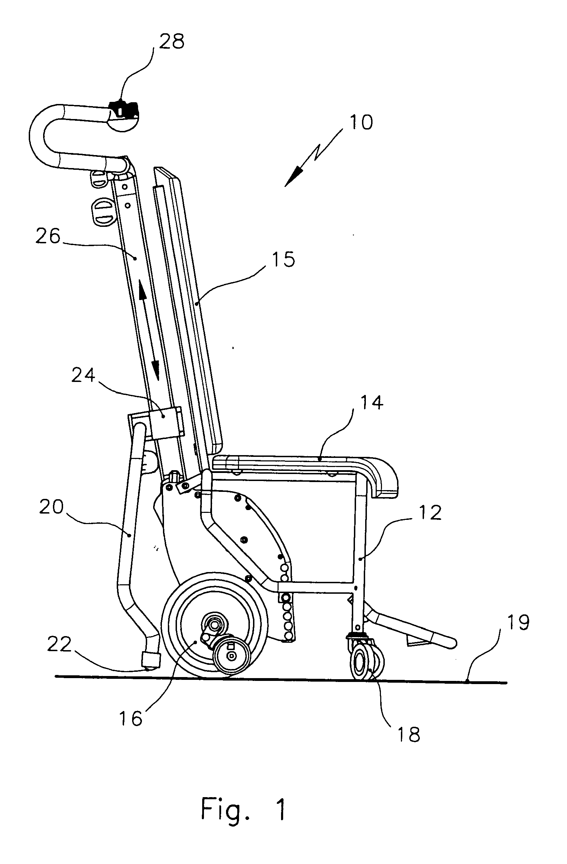

Fig. 1 zeigt mit 10 eine Treppensteig- und Transportvorrichtung, die eine Rahmenkonstruktion 12 aufweist. An der Rahmenkonstruktion 12 ist eine Sitzfläche 14 und eine Lehnenfläche 15 ausgebildet, auf die eine zu transportierende Person sitzen kann. An der Rahmenkonstruktion 12 sind auch Laufräder 16 befestigt, über die die Treppensteig- und Transportvorrichtung 10 verfahrbar ist. Gleichzeitig mit den Laufrädern 16 liegen Lenkräder 18 auf einer Bodenoberfläche 19 auf, wobei über die Lenkräder 18 Richtungswechsel der Treppensteig- und Transportvorrichtung 10 beim Verfahren der Treppensteig- und Transportvorrichtung 10 eingeleitet werden.

Die Treppensteig- und Transportvorrichtung 10 weist einen Stützfuß 20 auf, der an seinem freien Ende einen Rollkörper 22 (Kugel, Wälzkörper, Lenkrolle, Rad) aufnimmt. Der Stützfuß 20 ist über eine Aufnahme 24 an einem Stativrohr 26 in Pfeilrichtungen verfahrbar befestigt. Am oberen freien Ende des Stativrohres 26 sind Bedienelemente 28 zum Verfahren der Treppensteig- und Transportvorrichtung 10 vorgesehen, mit denen auch der Treppensteigmechanismus bedienbar ist. Die in Seitenansicht gezeigte Treppensteig- und Transportvorrichtung 10 zeigt jeweils nur ein Laufrad 16, ein Lenkrad 18 und einen Stützfuß 20. An der in der Figur dargestellten Treppensteig- und Transportvorrichtung 10 sind jeweils zwei Laufräder 16, zwei Lenkräder 18 und zwei Stützfüße 20 ausgebildet, wobei die Stützfüße 20 jeweils einen Rollkörper 22 aufnehmen. Sind die Rollkörper 22 von der Bodenfläche 19 beabstandet, so kann die Treppensteig- und Transportvorrichtung 10 in bekannter Weise verfahren werden.

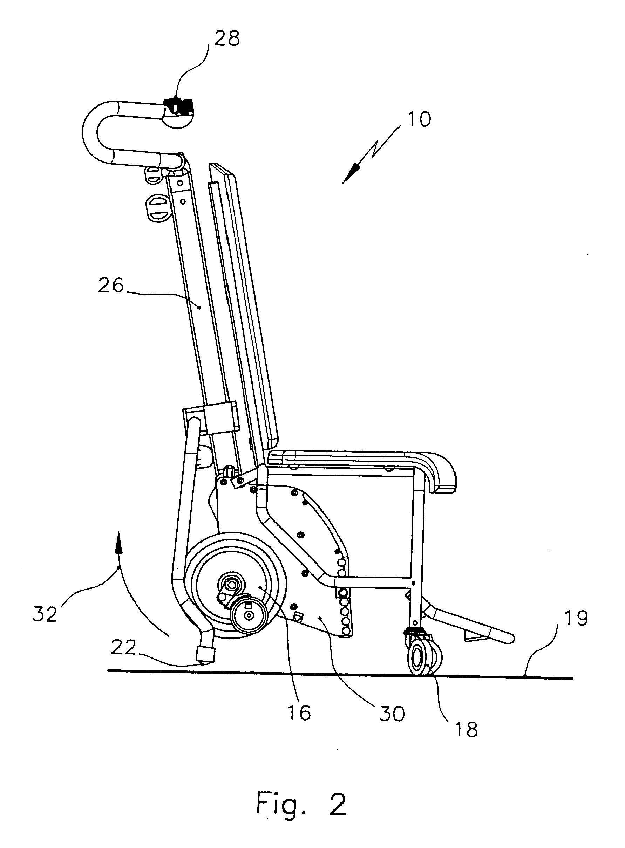

Fig. 2 zeigt die erfindungsgemäße Treppensteig- und Transportvorrichtung 10 in einem Zustand, in den über die Bedienelemente 28 die Laufräder 16 von der Bodenoberfläche 19 weg verfahren werden. Sobald die Laufräder 16 über den Treppensteigmechanismus von der Bodenoberfläche 19 weg verfahren werden, kippt die Treppensteig- und Transportvorrichtung 10 entgegen der Pfeilrichtung 32 in Richtung Bodenoberfläche 19 und die Rollkörper 22 setzen auf der Bodenoberfläche 19 auf. Der Treppensteigmechanismus verfährt die Laufräder 16 zum Aufsetzen der Rollkörper 22 auf der Bodenoberfläche 19 in Pfeilrichtung 32. Sollen die Rollkörper 22 wieder von der Bodenoberfläche 19 abgehoben werden, so werden die Laufräder 16 entgegen der Pfeilrichtung 32 so weit verfahren, dass sie erneut auf der Bodenoberfläche 19 aufsetzen.

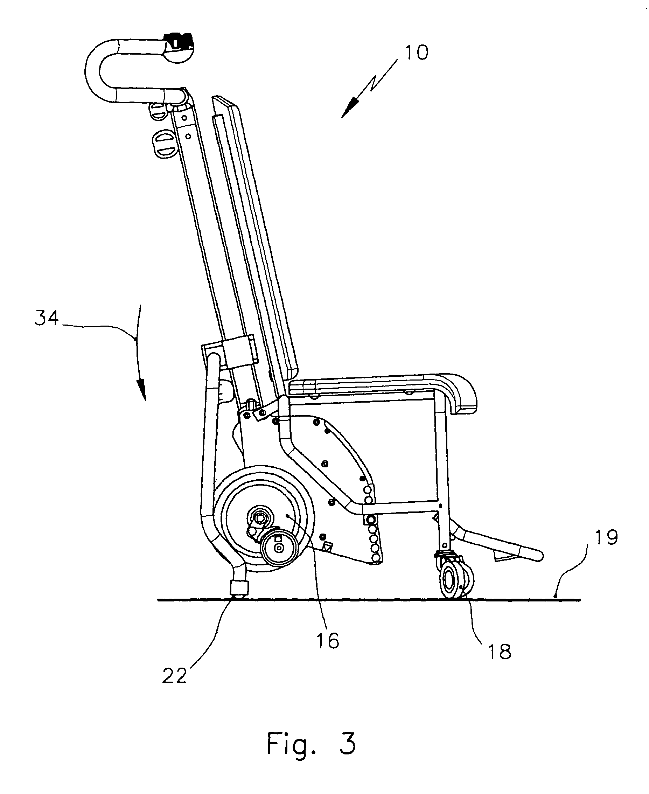

Fig. 3 zeigt die erfindungsgemäße Treppensteig- und Transportvorrichtung 10 in einer Seitenansicht, in der die Rollkörper 22 fest auf der Bodenoberfläche 19 aufliegen und das gesamte Gewicht der Treppensteig- und Transportvorrichtung 10 gemeinsam mit den Lenkrädern 18 aufnehmen. Die Treppensteig- und Transportvorrichtung 10 wurde in Pfeilrichtung 34 so weit abgekippt, dass die Rollkörper 22 auf der Bodenoberfläche 19 aufliegen und die Treppensteig- und Transportvorrichtung 10 ausschließlich über die Rollkörper 22 und die Lenkräder 18 verfahren wird. Ist ein Manövrieren auf engstem Raum nicht mehr notwendig, so werden die Laufräder 16 über den Treppensteigmechanismus wieder so weit abgesenkt, dass sie die Last der Treppensteig- und Transportvorrichtung 10 wieder aufnehmen können. Dabei werden die Rollkörper 22 von der Bodenoberfläche 19 abgehoben.

## Patentansprüche

1. Treppensteig- und Transportvorrichtung (10) zum Transport von Gegenständen jedweder Art und/oder Personen, mit einer Rahmenkonstruktion (12), an der neben einer Lastaufnahmevorrichtung (14, 15) für den zu transportierenden Gegenstand und/oder für die zu transportierende Person Laufräder (16) und gegebenenfalls Lenkräder (18) und Bedienelemente (26, 28) vorgesehen sind, **dadurch gekennzeichnet, dass** im Bereich der Laufräder (16) an der Rahmenkonstruktion (12) mindestens ein Rollkörper (22) vorgesehen ist, der in einer ersten Lage bei Auflage der Laufräder (16) auf einer Bodenoberfläche (19) von der Bodenoberfläche (19) beabstandet ist, und in einer zweiten Lage auf der Bodenoberfläche (19), die Last der Treppensteig- und Transportvorrichtung (10) aufnehmend, aufliegt und dabei gleichzeitig die Laufräder (16) von der Bodenoberfläche (19) beabstandet sind.

2. Treppensteig- und Transportvorrichtung (10) nach Anspruch 1, **dadurch gekennzeichnet, dass** der mindestens eine Rollkörper (22) über eine drehbare Kugel, ein Rad, einen Wälzkörper oder dergleichen auf der Bodenoberfläche (19) aufliegt.

3. Treppensteig- und Transportvorrichtung (10) nach Anspruch 1 oder 2, **dadurch gekennzeichnet, dass** zwei voneinander beabstandete Rollkörper (22) vorgesehen sind.

4. Treppensteig- und Transportvorrichtung (10) nach einem der Ansprüche 1 bis 3, **dadurch gekennzeichnet, dass** der oder die Rollkörper (22) den Laufrädern (16) nachlaufend an der Rahmenkonstruktion (12) vorgesehen sind.

5. Treppensteig- und Transportvorrichtung (10) nach einem der Ansprüche 1 bis 4, **dadurch gekennzeichnet, dass** die Rahmenkonstruktion (12) ein Stativrohr (26) aufweist, an dem der oder die Rollkörper (22) über einen Stützfuß (20) und eine Aufnahme (24) verschiebbar und arretierbar befestigt sind.
